# EUROPEAN PATENT APPLICATION

(11) **EP 4 632 925 A1**
(43) Date of publication of application: **15.10.2025**
(21) Application number: 24886211.2
(22) Date of filing: 29.10.2024
(51) Int. Cl.: H01M 50/392, H01M 50/141, H01M 50/35, H01M 50/178, H01M 50/183

(54) **POUCH-TYPE SECONDARY BATTERY AND BATTERY PACK INCLUDING SAME**

(30) Priority: 01.11.2023 KR 20230149520; 09.08.2024 KR 20240107187; 09.08.2024 KR 20240107188
(71) Applicant: LG Energy Solution, Ltd., Seoul 07335 (KR)
(72) Inventor: HWANG, Ji Young, Daejeon 34122 (KR); PARK, Eun Suk, Daejeon 34122 (KR); LEE, Yu Jin, Daejeon 34122 (KR); JU, Hye Yeong, Daejeon 34122 (KR); KIM, Sang Hun, Daejeon 34122 (KR); YU, Hyung Kyun, Daejeon 34122 (KR)
(74) Representative: Goddar, Heinz J.
(86) International application number: PCT/KR2024/016678
(87) International publication number: WO 2025/095538

(57) **Abstract**

A pouch type secondary battery according to the present invention is characterized in that it includes: an electrode assembly; a case that includes an accommodation portion accommodating the electrode assembly, and a terrace portion which is formed along a periphery of the accommodation portion, and has a sealing portion in which a portion of a width of the terrace portion is sealed; an electrode lead which is electrically connected to the electrode assembly and protrudes to an outside of the case; a lead film disposed between the electrode lead and the case; a gas guiding portion which is disposed between the electrode lead and the lead film, and includes a permeation portion provided on the outside of the case and one or more gas channels extending from the permeation portion toward the electrode assembly via the sealing portion; and a reinforcing film disposed on the lead film so as to cover at least a portion of the permeation portion.

## Description

### TECHNICAL FIELD

The present invention relates to a pouch type secondary battery and a battery pack including the same, and more particularly, to a pouch type secondary battery and a battery pack which include a gas guiding portion.

### BACKGROUND ART

Secondary batteries have been used in various fields, including not only small products such as digital cameras, P-DVDs, MP3Ps, mobile phones, PDAs, portable game devices, power tools, and E-bikes, but also large products requiring high output, such as electric vehicles and hybrid vehicles, and a power storage device and a power storage device for backup which store surplus generated power or renewable energy. Types of the secondary batteries include a nickel cadmium battery, a nickel hydride battery, a lithium ion battery, and a lithium ion polymer battery.

The secondary battery may be prepared by accommodating an electrode assembly, in which a positive electrode, a negative electrode, and a separator disposed therebetween are alternatingly stacked, in a battery case, injecting an electrolyte, and then sealing the battery case. The secondary battery is classified into a pouch type, a can type, and the like, according to a material of a case for accommodating the electrode assembly. After a cup portion is formed by press working of a flexible pouch film laminate, the pouch type battery among them may be prepared by accommodating the electrode assembly in an accommodation space inside the cup portion and sealing a sealing portion.

Gas may be generated in a pouch of the pouch type secondary battery during high-temperature operation, overcharge, or occurrence of a short circuit. In a case in which gas pressure in the pouch increases, there is a problem in that explosion or ignition occurs while the pouch is vented.

Accordingly, research is being conducted on various types of gas discharge components in order to solve the above-described problem, and there is a continuously increasing need for a gas discharge component in which gas discharge and problems of moisture penetration from the outside and electrolyte leakage are simultaneously considered, a gas discharge component operating at a low pressure while withstanding a high internal pressure, and furthermore, a gas discharge component with excellent durability.

### DISCLOSURE OF THE INVENTION

### TECHNICAL PROBLEM

An aspect of the present invention provides a pouch type secondary battery, in which durability is improved by solving a problem of moisture penetration or electrolyte solution leakage due to stretching of a film of a portion through which gas permeates according to gas discharge while maintaining a gas discharge rate at an appropriate level by using a reinforcing film for preventing deformation of a gas guiding portion in a secondary battery including the gas guiding portion, and a battery packing including the same.

### TECHNICAL SOLUTION

[1] According to an embodiment of the present invention, provided is a pouch type secondary battery including: an electrode assembly; a case that includes an accommodation portion accommodating the electrode assembly, and a terrace portion which is formed along a periphery of the accommodation portion, and has a sealing portion in which a portion of a width of the terrace portion is sealed; an electrode lead which is electrically connected to the electrode assembly and protrudes to an outside of the case; a lead film disposed between the electrode lead and the case; a gas guiding portion which is disposed between the electrode lead and the lead film, and includes a permeation portion provided on the outside of the case and one or more gas channels extending from the permeation portion toward the electrode assembly via the sealing portion; and a reinforcing film disposed on the lead film so as to cover at least a portion of the permeation portion.
[2] The pouch type secondary battery of [1] above, wherein an interface between the lead film and the gas guiding portion may be opened along the gas channel due to an increase in internal pressure of the case, to provide a gas discharge path.
[3] The pouch type secondary battery of [1] and/or [2] above, wherein the reinforcing film includes an insertion portion occupying the portion of the width of the sealing portion, wherein the insertion portion may be a region where one end of the reinforcing film is inserted between the lead film and the case of the sealing portion by extending in an inner side direction of the case.
[4] The pouch type secondary battery of at least one of [1] to [3] above, wherein an area based on an outer perimeter of the reinforcing film may be 100% to 500% of an area of the permeation portion.
[5] The pouch type secondary battery of at least one of [1] to [4] above, wherein the reinforcing film may be disposed on the lead film so as to cover a portion of the gas channel and the entire permeation portion of the gas guiding portion.
[6] The pouch type secondary battery of at least one of [1] to [5] above, wherein the reinforcing film has a hollow formed therein, wherein an area of the hollow may be smaller than an area of the permeation portion.
[7] The pouch type secondary battery of at least one of [1] to [6] above, wherein the reinforcing film has a hollow formed therein, wherein an area of the hollow may be 50% to 90% of an area of the permeation portion.
[8] The pouch type secondary battery of at least one of [1] to [7] above, wherein the reinforcing film may include at least one selected from the group consisting of a polyester-based resin, a polyolefin-based resin, a polyamide-based resin, and a polycarbonate-based resin.
[9] The pouch type secondary battery of at least one of [1] to [8] above, wherein the reinforcing film includes an adhesive layer in contact with the lead film; and a protective layer disposed on the adhesive layer, wherein the protective layer may include at least one selected from the group consisting of a polyester-based resin, a polyolefin-based resin, a polyamide-based resin, and a polycarbonate-based resin.
[10] The pouch type secondary battery of at least one of [1] to [9] above, wherein the reinforcing film has a hollow formed therein, and includes an adhesive layer in contact with the lead film; a protective layer disposed on the adhesive layer; and an insulating layer disposed on the protective layer, wherein the protective layer may include at least one selected from the group consisting of a polyester-based resin, a polyolefin-based resin, a polyamide-based resin, and a polycarbonate-based resin.
[11] The pouch type secondary battery of at least one of [1] to [10] above, wherein the gas guiding portion may have a structure in which an adhesive resin layer and a permeable resin layer are stacked from an upper surface of the electrode lead.
[12] The pouch type secondary battery of [11] above, wherein one end of the adhesive resin layer, which protrudes in an outer side direction of the case, may protrude further than one end of the permeable resin layer which protrudes in the outer side direction of the case.
[13] The pouch type secondary battery of [11] and/or [12] above, wherein one end of the lead film, which protrudes in an outer side direction of the case, may protrude further than one end of the permeable resin layer which protrudes in the outer side direction of the case.
[14] According to another embodiment of the present invention, provided is a battery pack including: a plurality of pouch type secondary batteries; and a packaging accommodating the secondary batteries, wherein the pouch type secondary battery includes an electrode assembly; a case that includes an accommodation portion accommodating the electrode assembly, and a terrace portion which is formed along a periphery of the accommodation portion, but has a sealing portion in which a portion of a width of the sealing portion is sealed; an electrode lead which is electrically connected to the electrode assembly and protrudes to an outside of the case; a lead film disposed between the electrode lead and the case; a gas guiding portion which is disposed between the electrode lead and the lead film, and includes a permeation portion provided on the outside of the case and one or more gas channels extending from the permeation portion toward the electrode assembly via the sealing portion; and a reinforcing film disposed on the lead film so as to cover at least a portion of the permeation portion.

### ADVANTAGEOUS EFFECTS

A pouch type secondary battery and a battery pack according to the present invention have an advantage in that they prevent a whitening phenomenon that occurs when a lead film is continuously tensioned as gas is discharged, may solve a problem of electrolyte solution leakage, and may simultaneously reduce possibility of moisture penetration by introducing a reinforcing film that covers a permeation portion of a gas guiding portion, and introducing the reinforcing film on an upper surface of the lead film.

Also, since the pouch type secondary battery and the battery pack according to the present invention introduce the reinforcing film covering the permeation portion of the gas guiding portion so as to minimize a decrease in gas discharge rate due to the coverage of the reinforcing film on the permeation portion, and, by controlling materials of layers constituting the reinforcing film, an area of the reinforcing film covering the permeation portion, whether or not a hollow is formed, and a laminated structure, the gas guiding portion having excellent durability may be achieved.

### BRIEF DESCRIPTION OF THE DRAWINGS

FIG. 1 is an exploded assembly view of a pouch type secondary battery.
FIG. 2 is a cross-sectional view of the sealed pouch type secondary battery.
FIG. 3 is an example of an enlarged cross-sectional view of Box A of FIG. 2, wherein it illustrates a state before an interface between a lead film and a gas guiding portion is opened.
FIG. 4 is an example of an enlarged cross-sectional view of Box A of FIG. 2, wherein it illustrates a state in which the interface between the lead film and the gas guiding portion is opened.
FIG. 5 is another example of an enlarged cross-sectional view of Box A of FIG. 2, wherein it illustrates a state before an interface between a lead film and a gas guiding film is opened.
FIG. 6 is yet another example of an enlarged cross-sectional view of Box A of FIG. 2, wherein it illustrates a state before an interface between a lead film and a gas guiding film is opened.
FIG. 7 is a top perspective view of a portion of an electrode lead in which a reinforcing film covers an entire surface of a permeation portion of the gas guiding portion.
FIG. 8 is a top perspective view of a portion of an electrode lead in which a reinforcing film having a hollow formed therein covers a partial surface of the permeation portion of the gas guiding portion.
FIG. 9 is a top perspective view of a portion of an electrode lead in which a reinforcing film having hollows formed therein covers a partial surface of the permeation portion of the gas guiding portion.
FIG. 10 is an enlarged cross-sectional view of a two-layer structured reinforcing film.
FIG. 11 is an enlarged cross-sectional view of a three-layer structured reinforcing film.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In this specification, the expression "%" denotes wt% unless explicitly stated otherwise.

A pouch type secondary battery and a battery pack described in this specification includes at least one of technical configurations described below, and may include any combination between technically possible configurations among the technical configurations below.

A pouch type secondary battery according to the present invention is characterized in that it includes: an electrode assembly; a case that includes an accommodation portion accommodating the electrode assembly, and a terrace portion which is formed along a periphery of the accommodation portion, but has a sealing portion in which a portion of a width of the terrace portion is sealed; an electrode lead which is electrically connected to the electrode assembly and protrudes to an outside of the case; a lead film disposed between the electrode lead and the case; a gas guiding portion which is disposed between the electrode lead and the lead film, and includes a permeation portion provided on the outside of the case and one or more gas channels extending from the permeation portion toward the electrode assembly via the sealing portion; and a reinforcing film disposed on the lead film so as to cover at least a portion of the permeation portion.

First, each component of the pouch type secondary battery of the present invention will be described in more detail with reference to the drawings.

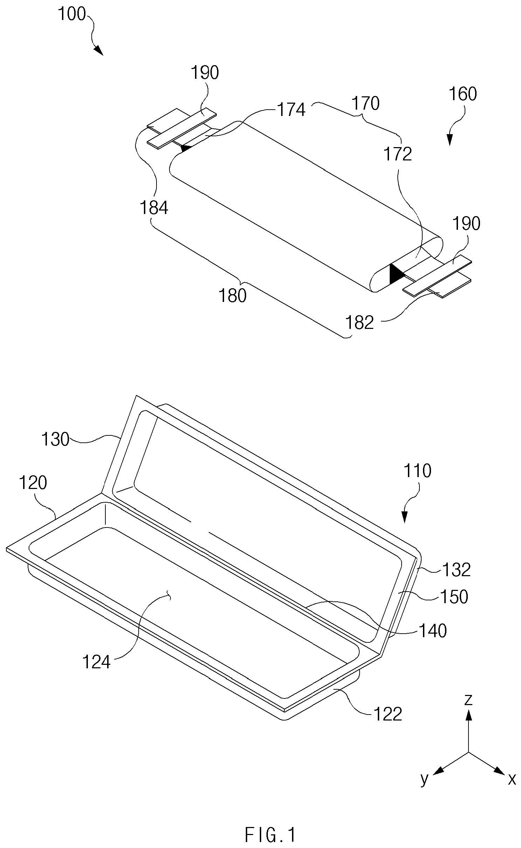

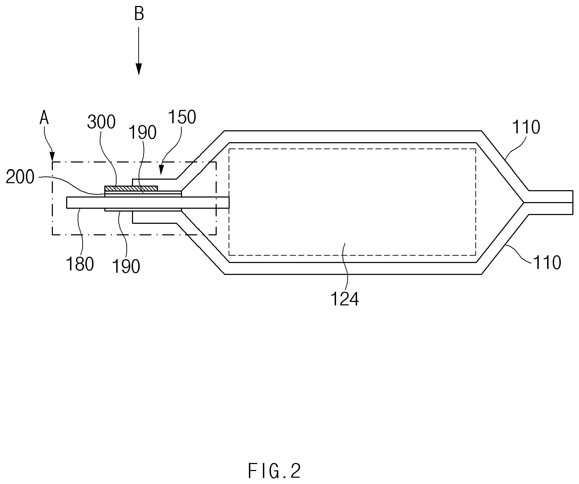

FIG. 1 is an exploded assembly view of a pouch type secondary battery 100 according to the present invention, and FIG. 2 is a cross-sectional view of the sealed pouch type secondary battery 100. In FIG. 2, some of components of the pouch type secondary battery 100 are omitted for ease of understanding. As illustrated in FIGS. 1 and 2, the pouch type secondary battery 100 of the present invention includes a case 110, an electrode assembly 160, an electrode lead 180, a lead film 190, a gas guiding portion 200, and a reinforcing film 300.

### (1) Case

According to an embodiment of the present invention, the case 110 may accommodate the electrode assembly 160 inside. The case 110 may be prepared by forming a pouch film laminate. In this case, the pouch film laminate may include a base material layer, a gas barrier layer, and a sealant layer. In the pouch film laminate, the base material layer, the gas barrier layer, and the sealant layer may be sequentially laminated.

The base material layer is formed as an outermost layer of the pouch film laminate to protect a secondary battery from friction and collision with the outside. The base material layer is formed of a polymer such that it may electrically insulate the electrode assembly from the outside.

The base material layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Preferably, the base material layer may be formed of polyethylene terephthalate (PET), Nylon, or a combination thereof, which has wear resistance and heat resistance.

The base material layer may have a single-layer structure formed of any one material. Alternatively, the base material layer may have a composite layer structure which is formed by layering two or more materials, respectively.

The base material layer may have a thickness of 5 µm to 50 µm, particularly 7 µm to 40 µm, and more particularly 25 µm to 38 µm. In a case in which the thickness of the base material layer satisfies the above range, since external insulation is excellent and an entire pouch is not thick, energy density to volume of the secondary battery may be excellent.

The gas barrier layer is laminated between the base material layer and the sealant layer to secure mechanical strength of the pouch, block incoming and outgoing of gas or moisture from the outside of the secondary battery, and prevent leakage of an electrolyte from the inside of the case.

The gas barrier layer may be formed of metal, and may specifically be formed of an aluminum alloy thin film. In a case in which the gas barrier layer is formed by using the aluminum alloy thin film, the gas barrier layer is light-weighted while securing more than a predetermined level of mechanical strength, may compensate for electrochemical properties by the electrode assembly and the electrolyte, and may secure a heat dissipation property. A metallic element other than aluminum (Al), for example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

The gas barrier layer may have a thickness of 40 µm to 100 µm, particularly 50 µm to 90 µm, and more particularly 55 µm to 85 µm. In a case in which the thickness of the gas barrier layer satisfies the above range, gas barrier performance and formability when forming a cup portion are excellent.

The sealant layer is for completely sealing the inside of the case by being thermally bonded to each other at a sealing portion when the case accommodating the electrode assembly inside is sealed. For this purpose, the sealant layer may be formed of a material having excellent thermal adhesive strength.

The sealant layer may be formed of a material having insulation properties, corrosion resistance, and sealing properties. Specifically, since the sealant layer is in direct contact with the electrode assembly and/or the electrolyte inside the case, it may be formed of a material having insulation properties and corrosion resistance. Also, since the sealant layer completely seals the inside of the case to block material movement between the inside/the outside, it may be formed of a material having high sealing properties (e.g., excellent thermal adhesive strength). To ensure such insulation properties, corrosion resistance, and sealing properties, the sealant layer may be formed of a polymer material.

The sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers, and may preferably be formed of a polyolefin-based resin such as polypropylene (PP) and/or polyethylene (PE). In this case, the polypropylene may be composed of cast polypropylene (CPP), acid modified polypropylene (PPa), a polypropylene-ethylene copolymer, and/or a polypropylene-butylene-ethylene terpolymer.

The sealant layer may have a thickness of 30 µm to 130 µm, particularly 50 µm to 120 µm, and more particularly 70 µm to 100 µm. In a case in which the thickness of the sealant layer satisfies the above range, there is an effect of securing formability of the pouch film laminate while securing sealing strength of the sealing portion.

The pouch film laminate may be drawn and stretched by a punch or the like to prepare the case 110. As a result, the case 110 may include a cup portion 122 and an accommodation portion 124. The accommodation portion 124 is a place to accommodate the electrode assembly, wherein it may mean an accommodation space which is formed in a pocket shape inside the cup portion 122 as the cup portion 122 is formed.

According to an embodiment of the present invention, the case 110 may include a first case 120 and a second case 130 as illustrated in FIG. 1. The first case 120 includes the accommodation portion 124 capable of accommodating the electrode assembly 160, and the second case 130 may cover the accommodation portion 124 from the top so that the electrode assembly 160 is not separated to the outside of the case 110. The first case 120 and the second case 130 may be prepared by connecting one sides thereof to each other as illustrated in FIG. 1, but the present invention is not limited thereto and the first case 120 and the second case 130 may be prepared in various ways, for example, the first case 120 and the second case 130 are separated from each other and prepared separately.

According to another embodiment of the present invention, in a case in which the cup portion is formed on the pouch film laminate, the two symmetrical cup portions 122 and 132 may be drawn adjacent to each other on one pouch film laminate. In this case, as illustrated in FIG. 1, the cup portions 122 and 132 may be formed in the first case 120 and the second case 130, respectively. After the electrode assembly 160 is accommodated in the accommodation portion 124 provided in the cup portion 122 of the first case 120, a bridge portion 140 formed between the two cup portions 122 and 132 may be folded so that the two cup portions 122 and 132 face each other. In this case, the cup portion 132 of the second case 130 may accommodate the electrode assembly 160 from above. Thus, since the two cup portions 122 and 132 accommodate the one electrode assembly 160, the electrode assembly 160 having a thickness greater than that when the cup portion 122 is one may be accommodated. Also, since one edge of the secondary battery 100 is formed by folding the case 110, the number of edges to be sealed may be reduced when a sealing process is performed later. Accordingly, a process speed of the pouch type secondary battery 100 may be improved, and the number of sealing processes may be reduced.

The case 110 may be sealed in a state in which it accommodates the electrode assembly 160 so that a portion of the electrode lead 180 to be described later, that is, a terminal portion, is exposed. Specifically, when the electrode lead 180 is connected to an electrode tab 170 of the electrode assembly 160 and the lead film 190 is formed in the portion of the electrode lead 180, the electrode assembly 160 is accommodated in the accommodation portion 124 provided in the cup portion 122 of the first case 120, and the second case 130 may cover the accommodation portion 124 from the top. Subsequently, an electrolyte is injected in the accommodation portion 124 and a portion of a terrace portion 150 formed on edges along peripheries of the first case 120 and the second case 130 may be sealed to form a sealing portion (not shown).

The sealing portion may act to seal the accommodation portion 124. Specifically, the sealing portion may seal the accommodation portion 124 while being formed on the terrace portion 150 which is formed on the edge along a periphery of the accommodation portion 124.

Temperature at which the sealing portion is sealed may be in a range of 180°C to 250°C, particularly 200°C to 250°C, and more particularly 210°C to 240°C. In a case in which the sealing temperature satisfies the above numerical range, the case 110 may secure sufficient sealing strength by thermal bonding.

### (2) Electrode Assembly

According to an embodiment of the present invention, the electrode assembly 160 may be inserted into the case 110 and may be sealed by the case 110 after the injection of the electrolyte.

The electrode assembly 160 may be formed by sequentially stacking a positive electrode, a separator, and a negative electrode. Specifically, the electrode assembly 160 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 160 may be prepared in a predetermined shape by stacking the positive electrode and the negative electrode on both sides of the separator. Types of the electrode assembly 160 may include a stacked type, a jelly-roll-type, and a stack and folding type, but are not limited thereto.

The electrode assembly 160 may include the electrode tab 170.

The electrode tab 170 is connected to each of the positive electrode and the negative electrode of the electrode assembly 160 and protrudes from the electrode assembly 160 to the outside so that it may be a path through which electrons may move between the inside and the outside of the electrode assembly 160. The electrode current collector included in the electrode assembly 160 may be composed of a portion to which the electrode active material is applied and an end portion to which the electrode active material is not applied, that is, an uncoated portion. The electrode tab 170 may be formed by cutting the uncoated portion or may be formed by connecting a separate conductive member to the uncoated portion by ultrasonic welding or the like. As illustrated in FIG. 1, the electrode tabs 170 may protrude in different directions of the electrode assembly 160, respectively, but are not limited thereto and may be formed to protrude in various directions, for example, the electrode tabs 170 protrude side by side from one side of the electrode assembly 160 in the same direction.

### (3) Electrode Lead

According to an embodiment of the present invention, the electrode lead 180 may supply electricity to the outside of the secondary battery 100. The electrode lead 180 may be connected to the electrode tab 170 of the electrode assembly 160 by spot welding or the like.

The electrode lead 180 is connected to the electrode assembly 160 and may protrude to the outside of the case 110 via the sealing portion 150. Specifically, one end of the electrode lead 180 is connected to the electrode assembly 160, especially the electrode tab 170, and the other end of the electrode lead 180 may protrude to the outside of the case 110 via the terrace portion 150.

The electrode lead 180 may include a positive electrode lead 182, which has one end connected to a positive electrode tab 172 and extends in a protruding direction of the positive electrode tab 172, and a negative electrode lead 184 which has one end connected to a negative electrode tab 174 and extends in a protruding direction of the negative electrode tab 174. The other ends of both of the positive electrode lead 182 and the negative electrode lead 184 may protrude to the outside of the case 110. Accordingly, the electricity generated inside the electrode assembly 160 may be supplied to the outside. Also, since the positive electrode tab 172 and the negative electrode tab 174 are formed to respectively protrude in various directions, the positive electrode lead 182 and the negative electrode lead 184 may also respectively extend in various directions. Materials of the positive electrode lead 182 and the negative electrode lead 184 may be different from each other. That is, the positive electrode lead 182 may be formed of an aluminum (Al) material that is the same as the positive electrode collector, and the negative electrode lead 184 may be formed of a copper (Cu) material or nickel (Ni)-coated copper material that is the same as the negative electrode collector. Since a portion of the electrode lead 180 protruding to the outside of the case 110 becomes a terminal portion, it may be electrically connected to an external terminal.

One surface of the electrode lead 180, which is in direct contact with the lead film 190 and/or the gas guiding portion 200, may be coated with at least one selected from the group consisting of chromium (Cr), nickel (Ni), aluminum oxide (Al₂O₃), a zirconium (Zr)-based anhydrous oxide salt, and a titanium (Ti)-based anhydrous oxide salt. In this case, corrosion resistance against the electrolyte solution and adhesiveness to the lead film 190 and/or the gas guiding portion 200 may be secured.

### (4) Lead Film

According to an embodiment of the present invention, the lead film 190 prevents flow of the electricity generated from the electrode assembly 160 to the case 110 through the electrode lead 180, and may maintain sealing of the case 110. For this purpose, the lead film 190 may be formed of an insulator having non-conductivity which does not conduct electricity well. In general, as the lead film 190, an insulating tape or film, which is easy to be attached to the electrode lead 180 and/or the gas guiding portion 200 and is relatively thin, is widely used, but the present invention is not limited thereto, and any member capable of insulating the electrode lead 180 may be used.

The lead film 190 may be disposed to surround outer circumferential surfaces of the electrode lead 180 and the gas guiding portion 200. Specifically, the electrode lead 180 and the gas guiding portion 200 are in contact with each other at one side, and, in this case, at least a portion of the electrode lead 180 and the gas guiding portion 200 may be surrounded by the lead film 190. The lead film 190 may be limitedly located at the sealing portion 150 to which the first case 120 and the second case 130 of the case 110 are thermally fused, and may adhere the electrode lead 180 and the gas guiding portion 200 to the case 110.

The lead film 190 may be disposed between the electrode lead 180 and/or gas guiding portion 200 and the case 110. For example, as illustrated in FIG. 2, the lower case 110, the lead film 190, the electrode lead 180, the gas guiding portion 200, the lead film 190, and the upper case 110 may be disposed in a sequentially stacked state in a region of the sealing portion 150.

The lead film 190 may include one or more layers. Specifically, the lead film 190 may include a metal adhesive layer, a core layer, and a pouch adhesive layer which are sequentially stacked.

The metal adhesive layer is in direct contact with the electrode lead 180, and may be used to adhere the lead film 190 to the electrode lead 180. The metal adhesive layer may include any material that easily adheres to the electrode lead 180. Specifically, the metal adhesive layer may include an acid-modified polyolefin. For example, the metal adhesive layer may include at least one of acid modified polypropylene (PPa), acid modified polyethylene (PEa), and plasma-treated polypropylene (PP), but is not limited thereto. Its thickness may be in a range of 50 µm to 80 µm, particularly 50 µm to 75 µm, and more particularly 60 µm to 75 µm. In a case in which the thickness of the metal adhesive layer satisfies the above numerical range, there is an effect of preventing pinholes and leakage at an edge portion when the electrode lead and the lead film are fused together.

The core layer may be a layer located at a center of the lead film 190. The core layer may include an additive such as polypropylene, a polyolefin elastomer (POE), and/or a colorant, but is not limited thereto. Among them, the polymer included in the core layer may be a homopolymer. In a case in which the homopolymer is included in the core layer, since a melting point of the core layer may be controlled within the above numerical range and deformation due to heat may be minimized, it is advantageous in terms of securing insulation properties. A thickness of the core layer may be in a range of 40 µm to 70 µm, particularly 50 µm to 70 µm, and more particularly 60 µm to 70 µm. In a case in which the thickness of the core layer satisfies the above numerical range, it has an effect of robust design in terms of securing the insulation properties by preventing the deformation due to heat applied during fusion and sealing.

The pouch adhesive layer may be a layer that is in direct contact with the case 110, specifically, the sealant layer of the pouch film laminate. The pouch adhesive layer may include polypropylene and a polyolefin elastomer (POE), but is not limited thereto. Among them, the polymer included in the pouch adhesive layer may be a copolymer. In a case in which the copolymer is included in the pouch adhesive layer, since a melting point of the pouch adhesive layer may be controlled within the above numerical range and is similar to that of the polymer in the sealant layer of the pouch film laminate, it is advantageous in securing sealing processability. A thickness of the pouch adhesive layer may be in a range of 40 µm to 100 µm, particularly 40 µm to 80 µm, and more particularly 40 µm to 60 µm. In a case in which the thickness of the pouch adhesive layer satisfies the above numerical range, there is an effect of securing a sufficient polymer (e.g., polypropylene) remaining ratio to secure strength when sealing between the electrode lead and the pouch film laminate.

### (5) Gas Guiding Portion

According to an embodiment of the present invention, the gas guiding portion 200 is for discharging gas from the inside of the case 110 to the outside, wherein it may include a permeation portion 230 provided on the outside of the case 110 and the one or more gas channels 240 extending from the permeation portion 230 toward the electrode assembly 160 via the sealing portion.

As illustrated in FIG. 2, the gas guiding portion 200 of the present invention may be disposed between the electrode lead 180 and the lead film 190. In this case, in a region between the electrode lead 180 and the lead film 190, the electrode lead 180 and the lead film 190 are not in direct contact with each other in a region where the gas guiding portion 200 is disposed, and the electrode lead 180 and the lead film 190 may be in direct contact with each other in a region where the gas guiding portion 200 is not disposed.

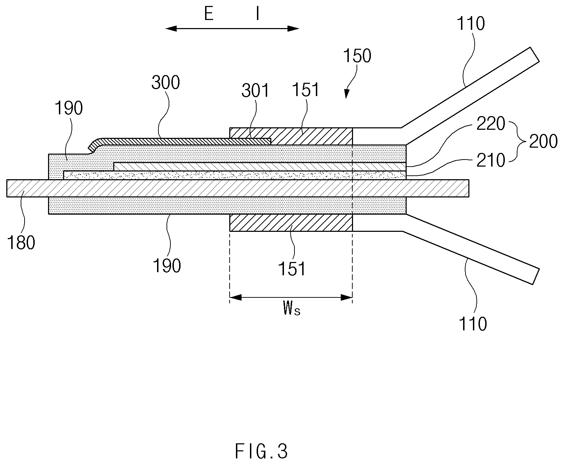

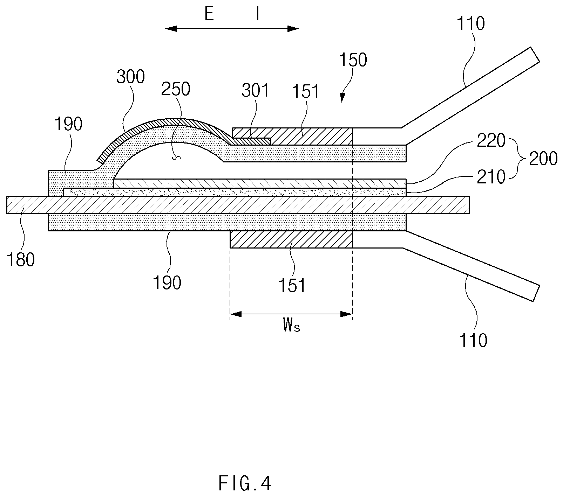

Hereinafter, the gas guiding portion 200 of the present invention will be described in more detail with reference to FIGS. 3 and 4. FIG. 3 is a cross-sectional view of the pouch type secondary battery before an interface between the gas guiding portion 200 and the lead film 190 is opened, and FIG. 4 is a cross-sectional view of the pouch type secondary battery after the interface between the gas guiding portion 200 and the lead film 190 is opened.

As illustrated in FIGS. 3 and 4, the interface between the gas guiding portion 200 and the lead film 190 is normally not opened, and if a pressure inside the case 110 increases, the interface between the gas guiding portion 200 and the lead film 190 may be opened along a gas channel 240 to form a gas discharge path 250. The gas inside the case 110 may move to the permeation portion 230 along the gas discharge path 250 on the gas channel 240, and, in this case, the gas may be discharged to the outside of the case 110 by permeating through the lead film 190 as a gas pocket is formed on the permeation portion 230. As a result, the internal pressure of the case 110 may be reduced to prevent explosion or ignition of the secondary battery.

As illustrated in FIGS. 3 and 4, the gas guiding portion 200 of the present invention includes an adhesive resin layer 210 in contact with the electrode lead 180, and a permeable resin layer 220 disposed on the adhesive resin layer 210. The adhesive resin layer 210 is in contact with the electrode lead 180 and may be used to adhere the gas guiding portion 200 to the electrode lead 180.

As illustrated in FIGS. 3 and 4, the gas guiding portion 200 includes the adhesive resin layer 210 in contact with the electrode lead 180, and the permeable resin layer 220 disposed on the adhesive resin layer 210. The adhesive resin layer 210 is in contact with the electrode lead 180 and may be used to adhere the gas guiding portion 200 to the electrode lead 180.

In an aspect, as in FIG. 3, an end of the adhesive resin layer 210 of the gas guiding portion 200 in an outer side direction E of the case may be formed longer than the permeable resin layer 220. Accordingly, a structure, in which the adhesive resin layer 210 is in direct contact with the lead film 190, may be formed at an end of the gas guiding portion 200 in the outer side direction E.

Independently thereof, an end of the lead film 190 protruding in the outer side direction E of the case may be disposed in direct contact with the electrode lead 180 by protruding further in the outer side direction E than an end of the adhesive resin layer 210 in the same direction.

Also, independently thereof, an end of the lead film 190 protruding in the outer side direction E of the case may be disposed by protruding further in the outer side direction E than an end of the permeable resin layer 220 in the same direction.

In a case in which the adhesive resin layer 210 is formed to protrude further than the permeable resin layer 220 in the outer side direction E of the case, or in a case in which the lead film 190 is formed to protrude further than the end of the permeable resin layer 220 and/or the adhesive resin layer 210 in the outer side direction of the case, adhesion between the electrode lead 180 and the gas guiding portion 200 and adhesion between the electrode lead 180 and the lead film 190 may be excellent, and thus, since a reduction in durability due to an increase in internal pressure may be prevented and an area of the permeation portion 230 on the permeable resin layer 220 may be easily secured, stable gas discharge may be possible.

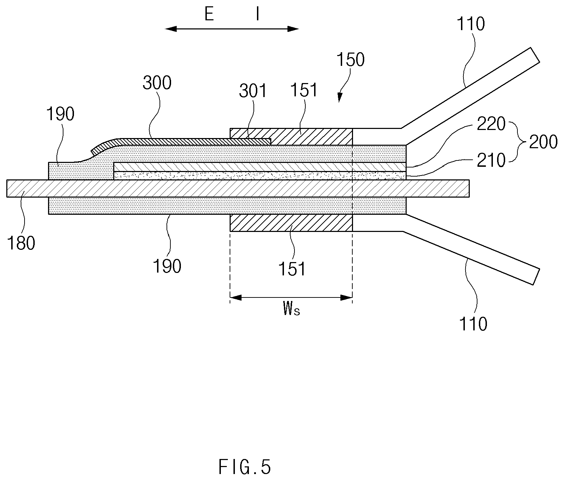

In another aspect, as in FIG. 5, one end of the lead film 190, which protrudes in the outer side direction E of the case, may be disposed in direct contact with the electrode lead 180 by protruding further than an end of the gas guiding portion 200 in the outer side direction E of the case. Independently thereof, ends of the two layers on the gas guiding portion 200 in the outer side direction E may be formed to coincide.

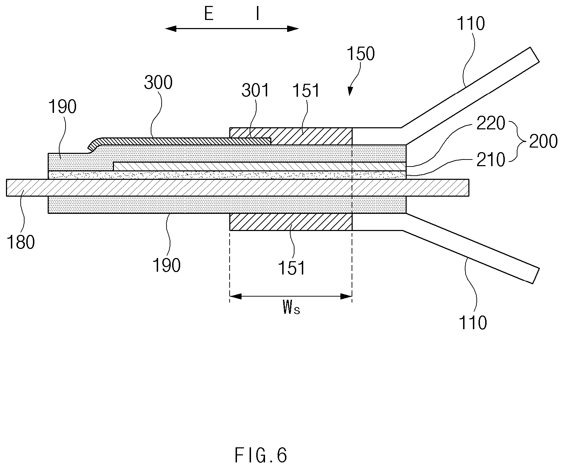

In another aspect, as in FIG. 6, one end of the adhesive resin layer 210, which protrudes in the outer side direction E of the case, protrudes further than an end of the permeable resin layer 220 in the outer side direction E of the case, but the end of the adhesive resin layer 210 in the outer side direction E may be formed to coincide with an end of the lead film 190 in the outer side direction E. In this case, the lead film 190 may have a structure in which it is not in direct contact with the electrode lead 180, but is in contact with the adhesive resin layer 210.

In a case in which an arrangement structure of the lead film 190, the electrode lead 180, and the gas guiding portion 200 is formed as in FIG. 3, FIG. 5, or FIG. 6, it may be advantageous in terms of securing the durability and securing the area of the permeation portion 230 in comparison to a case where the one end of the lead film 190 is not disposed to protrude further to the outside of the case 110 than the gas guiding portion 200 but is disposed on the permeable resin layer 220 of the gas guiding portion 200, but, although the lead film 190 may most preferably be disposed as in FIG. 3, there is no disadvantage in performance in the structure of FIG. 5 or FIG. 6 and there may be some differences in design and process.

The adhesive resin layer 210 may include any material that easily adheres to the electrode lead 180. Specifically, the adhesive resin layer 210 may include a modified polyolefin resin. In a case in which the modified polyolefin resin is included in the adhesive resin layer 210, since the adhesion between the gas guiding portion 200 and the electrode lead 180 is improved, a problem of the gas guiding portion 200 being detached from the electrode lead 180 and pushed out of the pouch or leakage of the electrolyte solution in the pouch may be prevented even if the pouch type secondary battery is stored in a high-temperature environment.

The adhesive resin layer 210 may include at least one of an acid-modified polyolefin and a silane-modified polyolefin.

The acid-modified polyolefin refers to a polyolefin resin which has been graft-modified with an acid. For example, the acid-modified polyolefin may be one in which a carboxyl group is introduced (graft-modified) by reacting an unsaturated carboxylic acid with a polyolefin resin. In this case, the unsaturated carboxylic acid may include a concept of a carboxylic anhydride, and the carboxyl group may include a concept of a carboxylic anhydride group. The unsaturated carboxylic acid to be reacted with the polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornene dicarboxylic anhydride, and tetrahydrophthalic anhydride, but is not limited thereto. Among them, it is preferable to use maleic anhydride to improve adhesive strength between the gas guiding portion 200 and the electrode lead 180. The acid-modified polyolefin may include at least one selected from the group consisting of acid modified polypropylene (PPa) and acid modified polyethylene (PEa), but is not limited thereto.

The silane-modified polyolefin refers to a polyolefin resin which has been graft-modified with an unsaturated silane compound. The silane-modified polyolefin may have a structure in which the unsaturated silane compound is graft-copolymerized onto the polyolefin resin as a main chain. The silane-modified polyolefin resin may include at least one selected from the group consisting of a silane-modified polypropylene resin and a silane-modified ethylene-vinyl acetate copolymer, but is not limited thereto.

The adhesive resin layer 210 may be subjected to a modification treatment, and the modification treatment may include an ion implantation treatment, a plasma treatment, a radiation treatment, or a heat treatment, and a treatment that changes a bonding structure of the polymer layer is preferable. One type of these modification treatments may be performed alone, but a combination of two or more types thereof may also be performed. The adhesive resin layer 210 subjected to the modification treatment may include plasma-treated polypropylene (PP), but is not limited thereto.

A thickness of the adhesive resin layer 210 may be in a range of 5 µm to 130 µm, particularly 30 µm to 120 µm, and more particularly 30 µm to 80 µm. In a case in which the thickness of the adhesive resin layer 210 satisfies the above numerical range, since the adhesive resin layer 210 is melted within a set tact time, the gas guiding portion 200 and the electrode lead 180 may be easily fused.

The permeable resin layer 220 may be a layer in contact with the lead film 190.

The permeable resin layer 220 may include at least one of polytetrafluoroethylene (PTFE) and polyimide (PI), but is not limited thereto. Among them, in a case in which the polyimide is included in the permeable resin layer 220, it is desirable in that the gas discharge path 250 may be formed when the internal pressure of the case 110 increases because adhesion between the permeable resin layer 220 and the lead film 190 is reduced.

A thickness of the permeable resin layer 220 may be in a range of 40 µm to 100 µm, particularly 40 µm to 90 µm, and more particularly 45 µm to 75 µm. In a case in which the thickness of the permeable resin layer 220 satisfies the above numerical range, since an interface between the permeable resin layer 220 and the lead film 190 may be lifted when the internal pressure of the case 110 increases without melting of the permeable resin layer 220 during the sealing process, the gas discharge path 250 may be formed.

A ratio (D1/D2) of the thickness (D1) of the adhesive resin layer to the thickness (D2) of the permeable resin layer may be in a range of 0.4 to 2.0, particularly 0.4 to 1.5, and more particularly 0.4 to 1.0. In a case in which the ratio (D1/D2) satisfies the above numerical range, since the interface between the permeable resin layer 220 and the lead film 190 is lifted when the internal pressure of the case 110 increases, the adhesive strength between the gas guiding portion 200 and the electrode lead 180 may be improved while the gas discharge path is formed.

The permeable resin layer 220 and the adhesive resin layer 210 may be laminated by thermocompression, and may be laminated after forming an adhesive layer therebetween, or the permeable resin layer 220 and the adhesive resin layer 210 in a form of a tape, on which an adhesive is applied to any one surface thereof and a release film is attached, may be laminated after removing the release film. There is no particular limitation on the method of laminating the permeable resin layer 220 and the adhesive resin layer 210, and, in addition to the above-described method, any method may be used as long as the two layers may adhere well to each other.

### (6) Reinforcing Film

According to an embodiment of the present invention, the reinforcing film 300 is characterized in that it functions to prevent a whitening phenomenon and an electrolyte solution seepage phenomenon by being disposed on the lead film 190 so as to cover at least a portion of the permeation portion 230 of the gas guiding portion 200.

In the pouch type secondary battery 100, gas is discharged by a series of mechanisms in which, as the interface between the gas guiding portion 200 and the lead film 190 is opened when the internal pressure increases, the gas discharge path 250 is formed by lifting stacks including the lead film 190 and the case 110 thereon upward only in a portion where the gas guiding portion 200 is disposed, and the gas inside is discharged to the outside by permeating the lead film 190 of a portion of the permeation portion 230 through the gas discharge path 250 thus formed.

If this gas discharge mechanism is repeated, the lead film 190 located on a portion through which the gas permeates, i.e., a region of the permeation portion 230 of the gas guiding portion 200 is continuously subjected to tension, and since the tension applied to the lead film 190 increases as the internal pressure increases, a whitening phenomenon may occur in the corresponding portion. Specifically, when a molecular structure in the lead film 190 is deformed due to continuous stretching of the film, internal stress increases due to the deformation, accordingly, a binding force between molecules is weakened, and the whitening phenomenon may occur in a portion where the binding force between the molecules is weakened.

In a case in which the gas is discharged and the internal pressure is reduced again, that is, in a case in which all the internal gas is discharged because a series of charge and discharge reactions are completed and the battery is in a storage state, the gas discharge path 250 is closed again while the lifted lead film 190 returns to its original state, and the gas discharge path 250 must be closed to minimize possibility of the leakage of the electrolyte solution to the outside. However, as described above, the portion, in which the binding force between the molecules is weakened, occurs inside the lead film 190, and the electrolyte solution may penetrate through this portion, wherein this may cause a problem in that an electrolyte solution seepage phenomenon is observed in a portion of the permeation portion 230 of the gas guiding portion 200 on the lead film 190 or in severe cases, a leakage phenomenon occurs, and, after the electrolyte solution seepage phenomenon or leakage has occurred once, possibility of moisture penetration from the outside is significantly increased. Also, in a case in which the phenomenon as described above is repeated, the electrode lead 180 may be corroded, and in a case in which the internal pressure increases, a problem may occur in which the lead film 190 bursts around the portion where the binding force is weakened.

Thus, the present invention aims to solve the above-described problem by introducing the reinforcing film 300 on the permeation portion 230 of the gas guiding portion 200, which is a region through which gas permeates, on the lead film 190, and, accordingly, durability may be ensured by suppressing deterioration of the gas guiding portion 200 and the lead film 190 due to continuous gas discharge.

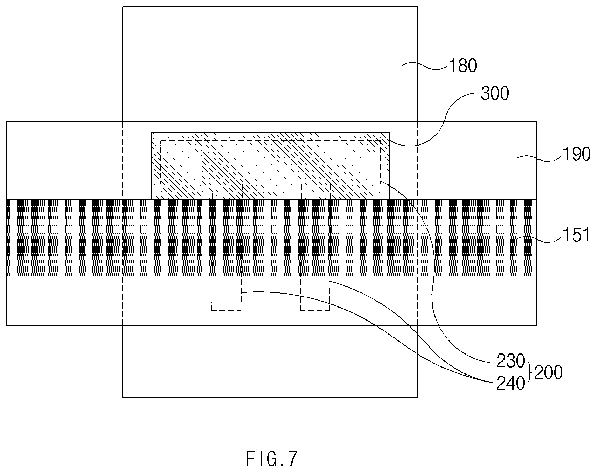

Referring to FIGS. 3 and 4, the gas guiding portion 200 is disposed on the electrode lead 180, the lead film 190 is disposed on the gas guiding portion 200, and the reinforcing film 300 is disposed on the lead film 190, but is disposed on a surface where the lead film 190 is exposed outside the terrace portion 150 of the case 110. As illustrated in FIG. 4, the gas discharge path 250 is formed as the interface between the gas guiding portion 200 and the lead film 190 is opened when the internal pressure increases, and the permeation portion 230 of the gas guiding portion 200 is disposed at an outermost side of the gas guiding portion 200 outside the terrace portion 150 as in FIG. 7 such that gas is discharged through the lead film 190 of this portion, and, since the reinforcing film 300 is disposed on the lead film 190 of the portion where the gas is discharged, the electrolyte solution seepage phenomenon or the whitening phenomenon due to the continuous stretching of the lead film 190 may be prevented even if continuous gas discharge action occurs, and thus, the durability may be increased.

In the reinforcing film 300, an area based on an outer perimeter of the reinforcing film 300 may be 100% to 500% of the area of the permeation portion 230 of the gas guiding portion 200. That is, the reinforcing film 300 may be disposed to cover at least the entire area of the permeation portion 230, and may be disposed to cover up to a maximum of 500%, preferably, up to 400%, 350%, or 300% based on the area (S_{A}) of the permeation portion 230. There is no particular problem as long as the reinforcing film 300 is designed to cover the entire area covering the permeation portion 230, but since it may be disadvantageous in terms of design such as the sealing process and a thickness of the terrace portion after sealing, it may be desirable to design the reinforcing film so as to satisfy the above-described range. Also, in order to effectively suppress the electrolyte solution seepage phenomenon and prevent the whitening phenomenon due to the stretching, it is desirable to design the area of the reinforcing film 300 to be 110% or more, 130% or more, or 150% or more based on the area of the permeation portion 230.

Furthermore, when designing the area covering the permeation portion 230, the reinforcing film 300 may be disposed such that a portion of the reinforcing film, which is greater than the area of the permeation portion 230, may also cover a portion of the gas channel 240.

That is, in terms of the fact that tension received by the lead film 190 at a portion where the gas channel 240 and the permeation portion 230 of the gas guiding portion 200 meet is relatively large, in order to effectively prevent the electrolyte solution seepage phenomenon and the whitening phenomenon due to the stretching, in a case in which the area of the reinforcing film is designed to be greater than the area of the permeation portion 230 of the gas guiding portion 200, it may be desirable to design the reinforcement film 300 to be wide in a width direction of the electrode lead 180 and simultaneously design the reinforcement film 300 to be long in a length direction of the electrode lead 180, and the reinforcing film may preferably be disposed to cover not only the permeation portion 230 but also the gas channel 240, and furthermore, may be designed to extend to a portion adjacent to the sealing portion 151.

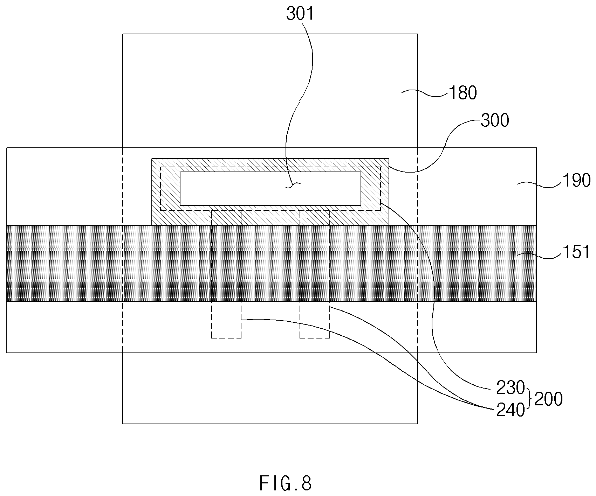

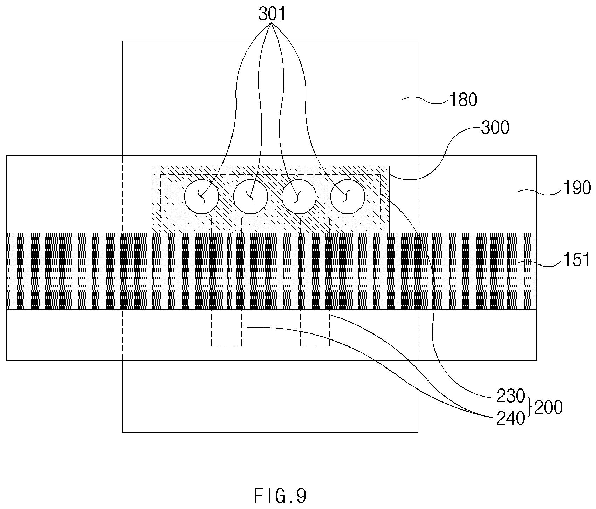

According to an embodiment of the present invention, the reinforcing film 300, as illustrated in FIGS. 8 and 9, may have a hollow 301 formed therein, and a shape in a plan view of the hollow may be rectangular (FIG. 8) or circular (FIG. 9). An area, rather than the shape, of the hollow 301 inside the reinforcing film 300 may have a greater effect on gas discharge performance or protection of the lead film 190, and a shape, which may secure an optimal area, may be appropriately selected by considering specifications of a cell or a configuration of the electrode assembly that is designed together in terms of securing a gas discharge area through the formation of the hollow 301.

Specifically, the area of the hollow 301 may be smaller than the area of the permeation portion 230, and preferably, the area of the hollow 301 may be 50% to 90% of the area of the permeation portion 230. The greatest expected effect of the formation of the hollow 301 lies in the gas discharge performance, but in terms of the fact that an expected effect of suppressing the whitening phenomenon and the electrolyte solution seepage phenomenon to be obtained by covering the reinforcing film 300 is also considered, it is desirable that the area of the hollow 301 is appropriately designed at a level of 50% to 90% of the area of the permeation portion as in the above range, and more preferably, the hollow 301 may be formed to have an area ranging from 50% to 85%, more preferably, 50% to 80%.

The hollow may have various shapes as described above, but, when designed as a rectangle, a length of the hollow in a protruding direction of the electrode lead may be designed to be smaller than a length of the permeation portion, and a width of the hollow in the width direction of the electrode lead may be designed to be smaller than a width of the permeation portion. As described in relation to the area of the hollow 301, it may be desirable for the width and length of the hollow 301 to be designed in the same sense, wherein it is better to design the width and length of the hollow by considering the fact that that the length of the hollow in the length direction of the electrode lead is shorter than the length of the permeation portion is preferable.

In an aspect, an end of the reinforcing film 300 may extend in an inner side direction I of the case to be inserted between the lead film 190 and the case 110 of a portion of the sealing portion 151, but may extend so as to occupy a portion of the width of the sealing portion 151. In this case, the sealing strength may be improved, and accordingly, since the durability is improved by maintaining the sealing strength even if the interface between the lead film 190 and the gas guiding portion 200 is repeatedly opened, an unintended venting phenomenon may be prevented.

A length ratio of an insertion portion (not shown) of the reinforcing film 300 to a sealing width (W_{S}) of the sealing portion 151 may be in a range of 0.05 to 0.90. In a case in which the insertion portion 301 is formed such that the length ratio satisfies the corresponding range, an advantage of being able to secure the sealing strength at a level that does not reduce processability of the sealing process may be expected. That is, in a case in which the reinforcing film 300 is inserted deep within the sealing width such that the insertion portion (not shown) covers the entire sealing portion 151, since delamination may occur at an interface between the multilayer-structured reinforcing films 300, the end of the reinforcing film 300 in the inner side direction I of the case is allowed to cover the sealing portion 151 by covering only a portion of the sealing width, and thus, the above-described problem of interface delamination may also be prevented. To further achieve this effect, preferably, the length ratio may be 0.07 or more, 0.09 or more, 0.10 or more, or 0.11 or more, and also, may be 0.85 or less, 0.83 or less, 0.80 or less, 0.79 or less, or 0.78 or less.

In an aspect, the reinforcing film 300 may include at least one selected from the group consisting of a polyester-based resin, a polyolefin-based resin, a polyamide-based resin, and a polycarbonate-based resin. Preferably, the polyester-based resin may include polyethylene terephthalate (PET) or polyethylene naphthalate (PEN), and may preferably include polyethylene naphthalate (PEN). Also, the polyolefin-based resin may include polyethylene (PE), polypropylene (PP) or a resin modified with acid or silicone thereof, and cast polyolefin may also be used. Furthermore, Nylon or polycarbonate may also be used. It is desirable to select a material of the reinforcing film by considering tensile strength and gas barrier properties of the material, and an appropriate material may be selected by also considering whether or not the hollow of the reinforcing film will be formed.

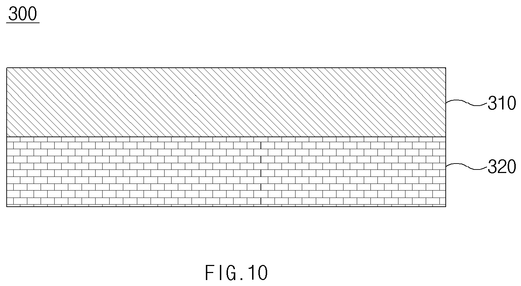

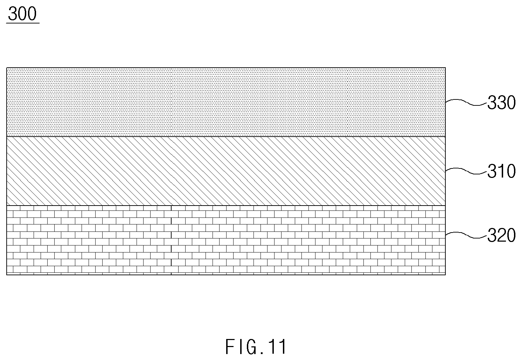

In an aspect, the reinforcing film 300 may specifically have a two-layer structure as in FIG. 10, or a three-layer structure as in FIG. 11. In a case in which the reinforcing film 300 has the two-layer structure, it may include a protective layer 310 and an adhesive layer 320 disposed between the protective layer 310 and the lead film 190. Also, in a case in which the reinforcing film 300 has the three-layer structure, it may include the protective layer 310, the adhesive layer 320 disposed between the protective layer 310 and the lead film 190, and an insulating layer 330, as an outermost surface, which is disposed on the protective layer 310.

The protective layer 310 may include at least one selected from the group consisting of a polyester-based resin, a polyolefin-based resin, a polyamide-based resin, and a polycarbonate-based resin as described above, and the adhesive layer 320 and the insulating layer 330 may each independently include at least one selected from the group consisting of acid modified polypropylene (PPa) and acid modified polyethylene (Pea). In a case in which the acid modified polypropylene or acid modified polyethylene is used as the adhesive layer 320, since adhesion to the lead film 190 is excellent, ability to maintain excellent durability is excellent, and, in a case in which the acid modified polypropylene or acid modified polyethylene is used as the insulating layer 330, it may greatly contribute to ability to prevent the moisture penetration from the outside.

Herein, the acid-modified polyolefin refers to a polyolefin resin which has been graft-modified with an acid. For example, the acid-modified polyolefin may be one in which a carboxyl group is introduced (graft-modified) by reacting an unsaturated carboxylic acid with a polyolefin resin. The unsaturated carboxylic acid to be reacted with the polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornene dicarboxylic anhydride, and tetrahydrophthalic anhydride, but is not limited thereto. Among them, it is preferable to use maleic anhydride to improve the adhesive strength between the gas guiding portion 200 and the electrode lead 180.

In an aspect, the reinforcing film 300 may be appropriately combined in a laminated structure and the formation of the hollow. In a case in which the hollow 301 is formed in the reinforcing film 300, either the two-layer structure or the three-layer structure may be used as the laminated structure of the reinforcing film 300. In a case in which the hollow 301 is formed, since a minimum gas discharge area may be secured, the gas discharge area is secured through the hollow 301 and expected effects of the present invention may be achieved by performing a function of suppressing the whitening phenomenon and suppressing the electrolyte solution seepage phenomenon through the reinforcing film 300 outside the hollow 301.

In a case in which the hollow 301 is not formed in the reinforcing film 300, it is desirable that the three-layer structured reinforcing film 300 is not used. The two-layer structured reinforcing film 300 does not significantly reduce the gas discharge rate even if it covers the region through which gas permeates, and, even if the gas discharge rate is reduced, it may be considered to have sufficient performance in maintaining cell performance and preventing a swelling phenomenon, but since the gas discharge rate is significantly reduced when the three-layer structure is used, it is desirable to avoid the three-layer structure, in which the hollow is not formed, when designing the reinforcing film 300.

Preferably, the reinforcing film may include the adhesive layer in contact with the lead film; and the protective layer disposed on the adhesive layer and containing a polyester-based resin, or the reinforcing film has the hollow formed therein, wherein it may include the adhesive layer in contact with the lead film; and the protective layer disposed on the adhesive layer and containing a polyester-based resin.

As another example, the reinforcing film has the hollow formed therein, wherein it may include the adhesive layer in contact with the lead film; the protective layer disposed on the adhesive layer and containing a polyester-based resin; and the insulating layer disposed on the protective layer.

### (7) Electrolyte

The pouch type secondary battery 100 according to the present invention may further include an electrolyte (not shown) that is injected into the case 110. The electrolyte is for moving lithium ions that are generated by an electrochemical reaction of the electrode during charge/discharge of the secondary battery 100, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Example 1

### (1) Preparation of Case

A polyethylene terephthalate (PET) film having a width of 266 mm, a length of 50 m, and a thickness of 12 µm and a Nylon film having a width of 266 mm, a length of 50 m, and a thickness of 25 µm were laminated on one surface of an aluminum alloy thin film having a width of 266 mm, a length of 50 m, and a thickness of 60 µm, and a polypropylene film having a width of 266 mm, a length of 50 m, and a thickness of 80 µm was laminated on the other surface thereof to prepare a pouch film laminate having a structure of polyethylene terephthalate/Nylon/aluminum alloy thin film/polypropylene film.

Herein, the polyethylene terephthalate film and the Nylon film were a base material layer, the aluminum alloy thin film was a gas barrier layer, and the polypropylene film was a sealant layer.

A case including an accommodation portion and a sealing portion was prepared by forming the pouch film laminate.

### (2) Preparation of Pouch Type Secondary Battery

A negative electrode, a positive electrode, and a porous polyethylene separator were assembled by a stacking method and then laminated to prepare an electrode assembly. Thereafter, an electrode lead was bonded to the electrode assembly.

An electrolyte was prepared by dissolving LiPF₆ in a solvent (EC:EMC:DMC = 3:3:4 volume ratio) such that a concentration of the LiPF₆ was 1.0 M. The electrode assembly was accommodated in the case in a state in which a tip of the electrode lead was drawn to the outside and the electrolyte was injected.

A 50 µm thick polytetrafluoroethylene film (permeable resin layer) were attached to a 40 µm thick acid-modified polypropylene film (adhesive resin layer) on an upper surface of the electrode lead to form a gas guiding portion.

Subsequently, a 200 µm thick lead film was stacked on each of a lower surface of the electrode lead and an upper surface of the gas guiding portion. The lead film included a 75 µm thick metal adhesive layer including copolymer polypropylene and acid-modified polypropylene, a 65 µm thick core layer including homopolymer polypropylene, and a 60 µm thick pouch adhesive layer including copolymer polypropylene.

Finally, a reinforcing film was formed by sequentially laminating a 40 µm thick acid-modified polypropylene film and a 12 µm thick polyethylene naphthalate film on an upper surface of the lead film on which the gas guiding portion was formed, particularly, on an upper surface of the lead film on which the permeation portion of the gas guiding portion, which was disposed on the outside of the case relative to the sealing position, was formed.

Thereafter, the sealing portion of the case was sealed for 2 seconds under conditions of a seal bar area of 200 mm × 10 mm, 220°C, and 0.27 MPa, and was then left standing at 60°C for 4 hours to prepare a pouch type secondary battery. In this case, a portion of a terrace portion where the permeation portion of the gas guiding portion was formed had a structure in which lower case/lead film/electrode lead/gas guiding portion/lead film/upper case were sequentially stacked.

### Example 2

A pouch type secondary battery was prepared in the same manner as in Example 1 except that a hollow was formed in the reinforcing film, but an area of the hollow was 50% of an area of the permeation portion of the gas guiding portion.

### Example 3

A pouch type secondary battery was prepared in the same manner as in Example 1 except that a hollow was formed in the reinforcing film, but an area of the hollow was 75% of an area of the permeation portion of the gas guiding portion.

### Example 4

A pouch type secondary battery was prepared in the same manner as in Example 1 except that a 40 µm thick acid-modified polypropylene film was additionally laminated on an upper surface of the polyethylene naphthalate film of the reinforcing film, and a hollow was formed, but an area of the hollow was 50% of an area of the permeation portion of the gas guiding portion.

### Example 5

A pouch type secondary battery was prepared in the same manner as in Example 1 except that a 40 µm thick acid-modified polypropylene film was additionally laminated on an upper surface of the polyethylene naphthalate film of the reinforcing film, and a hollow was formed, but an area of the hollow was 75% of an area of the permeation portion of the gas guiding portion.

### Example 6

A pouch type secondary battery was prepared in the same manner as in Example 1 except that a 100 µm thick polypropylene film was used instead of the polyethylene naphthalate film of the reinforcing film.

### Example 7

A pouch type secondary battery was prepared in the same manner as in Example 1 except that a 200 µm thick polypropylene film was used instead of the polyethylene naphthalate film of the reinforcing film.

### Comparative Example 1

A pouch type secondary battery was prepared in the same manner as in Example 1 except that a reinforcing film was not formed.

### Experimental Example 1: Gas Discharge Rate Measurement

A gas discharge rate was measured for each of the pouch type secondary batteries prepared in Examples 1 to 7 and Comparative Example 1.

Specifically, CO₂ was injected into an inside of the pouch type secondary battery using a pressure-resistant device by ITS to increase an internal pressure of a pouch to 1.5 atm, an amount of gas discharged for 24 hours was then measured, and the results thereof are presented in Table 1 below.

### Experimental Example 2: Measurement of Operating Pressure of the Gas Guiding Portion

An operating pressure of the gas guiding portion was measured for each of the pouch type secondary batteries prepared in Examples 1 to 7 and Comparative Example 1.

Specifically, while increasing the internal pressure of the pouch in increments of 0.1 atm by injecting CO₂ into the inside of the pouch type secondary battery using a pressure-resistant device by ITS, the pouch type secondary battery was left standing for 24 hours at each pressure to measure a pressure at the time when the permeation portion of the gas guiding portion was completely deformed (case where the entire permeation portion was lifted), and the results thereof are presented in Table 1 below.

### Experimental Example 3: Occurrence or Non-occurrence of Whitening Phenomenon and the Presence of Electrolyte Solution Seepage

For each of the pouch type secondary batteries prepared in Examples 1 to 7 and Comparative Example 1, for 24 hours after increasing the internal pressure of the pouch to 2.0 atm by injecting CO₂ into the inside of the pouch type secondary battery using a pressure-resistant device by ITS, a whitening (stretching) phenomenon at an edge portion of the gas guiding portion was calculated by Equation 1 below, and the presence of electrolyte solution seepage was confirmed. Whitening phenomenon (%) = [length of whitening occurring on the lead film (mm)]/[total perimeter length of the gas guiding portion (mm)]

**[Table 1]**

| | Gas discharge rate (cc/day) | Operating pressure (atm) | Whitening phenomenon (%) | The presence of electrolyte solution seepage |
|---|---|---|---|---|
| Example 1 | 5.3 | 0.8 | 0 | X |
| Example 2 | 8.1 | 0.8 | 6.15 | X |
| Example 3 | 8.9 | 0.8 | 12.2 | X |
| Example 4 | 4.6 | 0.8 | 6.1 | X |
| Example 5 | 7.4 | 0.8 | 12.2 | X |
| Example 6 | 8.4 | 0.8 | 0 | X |
| Example 7 | 6.8 | 0.8 | 0 | X |
| Comparative Example 1 | 16.8 | 0.8 | 97.6 | O |

According to Table 2, with respect to Examples 1 to 7 in which the reinforcing film was used on the upper surface of the lead film on the permeation portion of the gas guiding portion, it may be confirmed that a degree of occurrence of the whitening phenomenon was significantly low or the whitening phenomenon did not occur at all while the gas discharge rate was maintained at an appropriate level, and the electrolyte solution seepage phenomenon also did not occur. However, with respect to Comparative Example 1, although the gas discharge rate was high, it was confirmed that the whitening phenomenon occurred extremely severely and the electrolyte solution seepage phenomenon occurred.

### [Description of the Symbols]

- 100:: Pouch Type Secondary Battery
- 110:: Case
- 120:: First Case
- 122:: Cup Portion
- 124:: Accommodation Portion
- 130:: Second Case
- 132:: Cup Portion
- 140:: Bridge Portion
- 150:: Terrace Portion
- 151:: Sealing Portion
- 160:: Electrode Assembly
- 170:: Electrode Tab
- 172:: Positive Electrode Tab
- 174:: Negative Electrode Tab
- 180:: Electrode Lead
- 182:: Positive Electrode Lead
- 184:: Negative Electrode Lead
- 190:: Lead Film
- 200:: Gas Guiding Portion
- 210:: Adhesive Resin Layer
- 220:: Permeable Resin Layer
- 230:: Permeation Portion
- 240:: Gas Channel
- 250:: Gas Discharge Path
- 300:: Reinforcing Film
- 301:: Hollow
- 310:: Protective Layer
- 320:: Adhesive Layer
- 330:: Insulating Layer

## Claims

1. A pouch type secondary battery comprising:
an electrode assembly;
a case that includes an accommodation portion accommodating the electrode assembly, and a terrace portion which is formed along a periphery of the accommodation portion, and has a sealing portion in which a portion of a width of the terrace portion is sealed;
an electrode lead which is electrically connected to the electrode assembly and protrudes to an outside of the case;
a lead film disposed between the electrode lead and the case;
a gas guiding portion which is disposed between the electrode lead and the lead film, and includes a permeation portion provided on the outside of the case and one or more gas channels extending from the permeation portion toward the electrode assembly via the sealing portion; and
a reinforcing film disposed on the lead film so as to cover at least a portion of the permeation portion.

2. The pouch type secondary battery of claim 1, wherein an interface between the lead film and the gas guiding portion is opened along the gas channel due to an increase in internal pressure of the case, to provide a gas discharge path.

3. The pouch type secondary battery of claim 1, wherein the reinforcing film comprises an insertion portion occupying the portion of the width of the sealing portion,
wherein the insertion portion is a region where one end of the reinforcing film is inserted between the lead film and the case of the sealing portion by extending in an inner side direction of the case.

4. The pouch type secondary battery of claim 1, wherein an area based on an outer perimeter of the reinforcing film is 100% to 500% of an area of the permeation portion.

5. The pouch type secondary battery of claim 1, wherein the reinforcing film is disposed on the lead film so as to cover a portion of the gas channel and the entire permeation portion of the gas guiding portion.

6. The pouch type secondary battery of claim 1, wherein the reinforcing film has a hollow formed therein,
wherein an area of the hollow is smaller than an area of the permeation portion.

7. The pouch type secondary battery of claim 1, wherein the reinforcing film has a hollow formed therein,
wherein an area of the hollow is 50% to 90% of an area of the permeation portion.

8. The pouch type secondary battery of claim 1, wherein the reinforcing film comprises at least one selected from the group consisting of a polyester-based resin, a polyolefin-based resin, a polyamide-based resin, and a polycarbonate-based resin.

9. The pouch type secondary battery of claim 1, wherein the reinforcing film comprises an adhesive layer in contact with the lead film; and a protective layer disposed on the adhesive layer,
wherein the protective layer comprises at least one selected from the group consisting of a polyester-based resin, a polyolefin-based resin, a polyamide-based resin, and a polycarbonate-based resin.

10. The pouch type secondary battery of claim 1, wherein the reinforcing film has a hollow formed therein, and
comprises an adhesive layer in contact with the lead film; a protective layer disposed on the adhesive layer; and an insulating layer disposed on the protective layer,
wherein the protective layer comprises at least one selected from the group consisting of a polyester-based resin, a polyolefin-based resin, a polyamide-based resin, and a polycarbonate-based resin.

11. The pouch type secondary battery of claim 1, wherein the gas guiding portion has a structure in which an adhesive resin layer and a permeable resin layer are stacked from an upper surface of the electrode lead.

12. The pouch type secondary battery of claim 11, wherein one end of the adhesive resin layer, which protrudes in an outer side direction of the case, protrudes further than one end of the permeable resin layer which protrudes in the outer side direction of the case.

13. The pouch type secondary battery of claim 11, wherein one end of the lead film, which protrudes in an outer side direction of the case, protrudes further than one end of the permeable resin layer which protrudes in the outer side direction of the case.

14. A battery pack comprising:
a plurality of pouch type secondary batteries; and a packaging accommodating the secondary batteries,
wherein the pouch type secondary battery comprises:
an electrode assembly;
a case that includes an accommodation portion accommodating the electrode assembly, and a terrace portion which is formed along a periphery of the accommodation portion, but has a sealing portion in which a portion of a width of the sealing portion is sealed;
an electrode lead which is electrically connected to the electrode assembly and protrudes to an outside of the case;
a lead film disposed between the electrode lead and the case;
a gas guiding portion which is disposed between the electrode lead and the lead film, and includes a permeation portion provided on the outside of the case and one or more gas channels extending from the permeation portion toward the electrode assembly via the sealing portion; and
a reinforcing film disposed on the lead film so as to cover at least a portion of the permeation portion.
